# EUROPEAN PATENT APPLICATION

(11) **EP 0 653 733 A1**
(43) Date of publication of application: **17.05.1995**
(21) Application number: 94117635.6
(22) Date of filing: 08.11.1994
(51) Int. Cl.: G07F 9/10, A47J 43/14

(54) **Dispensing system for egg vending machine**

(30) Priority: 08.11.1993 KR 2361193
(71) Applicant: LEE, Taehwee, Anyang-si, Kyongki-do (KR)
(72) Inventor: LEE, Taehwee, Anyang-si, Kyongki-do (KR)
(74) Representative: Hering, Hartmut, Dipl.-Ing.

(57) **Abstract**

The present invention relates to the dispensing system of a fried-egg slot machine. An egg is transferred from an egg dispenser to a receptor, where the egg is held by a suction plate, transferred to and transported by the conveyer, and then cracked by a cracker by sequential triggering signals. The cracked egg then breaks readily by the opening of the suction cone, and the fluid content drops to a fryer, which in turn cooks and dispenses the fried egg on a serving dish dropped from a dish dispenser. The egg shell held on the suction cone is removed by the egg conveyer.

## Description

### Field of the Invention

The present invention relates to machines for dispensing and/or vending and, more particularily, to vending or dispensing machines which are capable of performing operations on the items to be dispensed, such as the cooking of an egg.

Commercial vending machines have been available for fried eggs. All the currently available machines use a tong for holding and breaking an egg, and the egg held in a cup is then cooked in a microwave oven. This mechanism, however, has the following problems the egg shell tends to be mixed into the container cup together with the fluid content; the egg scrambled in the cup degrades the flavor; the remnant egg fluid stuck on the arms of the tong is vulnerable to bacteria; and the imprecise system operation often causes the machine breakdown.

The purpose of the present invention is to solve such problems by adopting a new operational mechanism in which the bursting of the yolk of the egg is prevented by a sequential operation of air pressure and limit switch action.

The egg on a carousel in the egg dispenser is dropped sequentially by a triggering signal to a receptor, transferred to and transported by the conveyer, and then cracked by the a cracker. The egg then breaks readily by the opening of the suction cone, and the fluid content drops to a fryer, which in turn cooks and places the fried egg on a serving dish dropped from a dish dispenser. The egg shell stuck on the suction cones is removed by the egg conveyer.

When the main power is turned on, the following machine conditions are established. The connector arm of the egg receptor is lifted, and an egg is then dropped to the receptor plate from the carousel of the egg dispenser. The egg is securely placed on the vacuum suction plate, which is located at the center of the receptor plate. The suction unit of the egg conveyer is opened so that the egg receptor can be lowered. The egg cracker remains retreated, the fryer closed, and the frying pan kept at a constant temperature by the heater. The coin insertion and subsequent button selection will trigger the egg frying and dispensing operations.

The above and other objects, features and other advantages of the present invention will be more clearly understood from the following detailed description taken in conjuction with the accompanying drawings, in which:
Fig. 1 is a schematic diagram of the present invention;
Fig. 2 is a perspective diagram of the egg receptor;
Fig. 2A is a operation of the limit switch;
Fig. 3 is a perspective diagram of the egg conveyer;
Fig. 4 is a perspective diagram of the egg fryer;
Fig. 5 is a perspective diagram of the frying pan;
Fig. 6 is a perspective diagram of the liquid trap;
Fig. 7 is a diagram of the egg cracker;
Fig. 7A is a side view of the egg cracker;
Fig. 8 is a top view of the egg carousel stacked in the egg dispenser;
Fig. 8A is a perspective diagram of the jig for holding the egg in place;
Fig. 8B is a side view showing the egg being dispensed from the eggdispenser;
Fig. 9 is a perspective diagram of the dish dispenser; and
Fig. 10 is a perspective diagram of the serving dish.

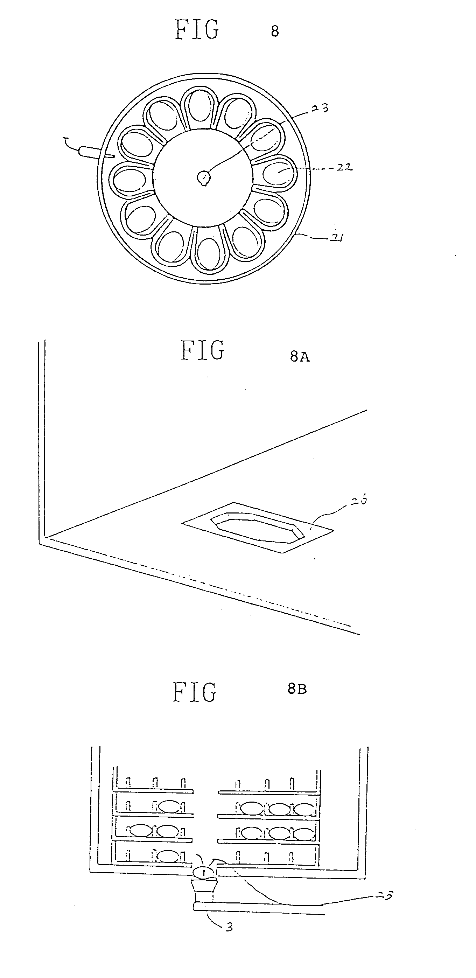

As shown in Fig. 8, 8A, and 8B, eggs are stored in each compartment 22 of the carousels 21 in the egg dispenser 2. The stacked carousels 22 all fixed to a carousel shaft 23 are rotated by a chain connected to a motor. The dispenser opening 25 at the bottom of the dispenser 2 forms "○" shaped jig 26 such that a dropping egg always retains a predetermined orientation.

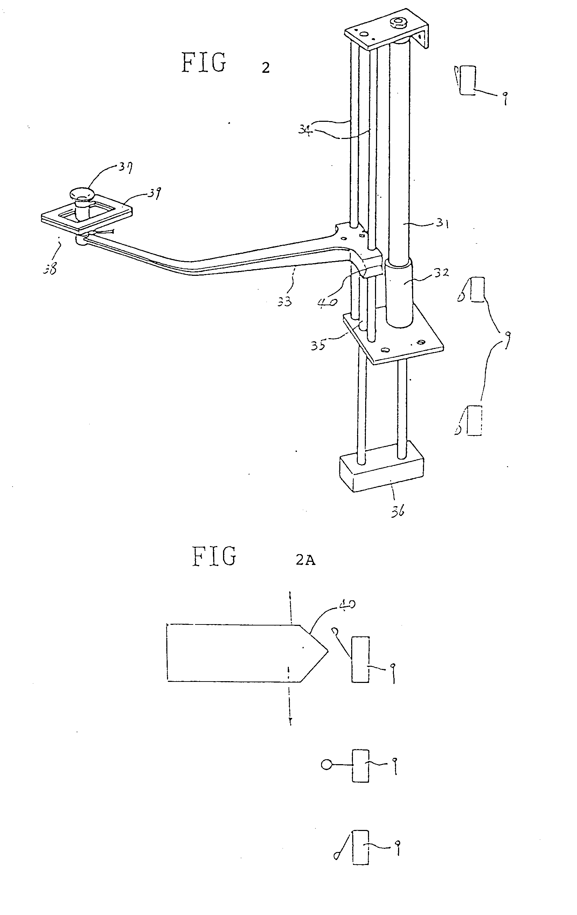

The receptor 3 which receives the egg from the jig 26 of the dispenser 2 is shown in Figs. 2 and 2A. The receptor operation is achieved by a two-gear cylinder 31 and 32 assembly. The guiding rods 34, to which the connector arm 33 is attached, are located in front of the cylinder 31 and 32 assembly. A connecting rod 34 located between the guiding rods 34 is secured by a nut together with the connector plate 36 to the receptor body. At the end of connector arm 33 is located the receptor plate 38 on which the suction plate 37 is positioned in the middle. The packing seal 39 on top of the receptor plate 38 attaches itself tightly to the bottom of the dispenser opening 25.

The contact protrusion 40 at one side of the connector arm 33 activates the limit switch which 9 is attached to the receptor body.

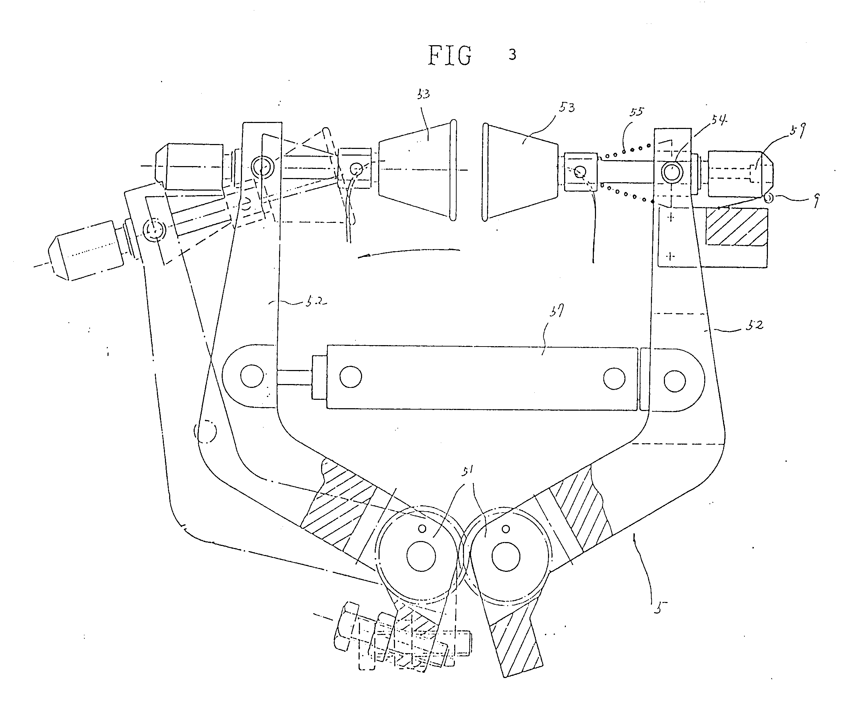

The egg conveyer 5 which transports the egg from the receptor 3 to the cracker 1 is shown in Fig. 3. The conveyor 5 consists primarily of a pair of operation shafts 52, driven by a pair of gears 51, and a pair of suction cones 53, located at the end of the operation shafts 52 readily rotable by rotator shafts 54. Suction tubes are connected to the suction cones 53. A pressure spring 55 connects the rotator shaft 54 and the suction cone 53. The operation rods 56 activate the limit switches 9 on the rotator shafts 54. The open gap between the operation shafts is precisely controlled by a gap cylinder 57. The suction cones 53 take the egg from the suction plate 37 of the receptor 3 by a pneumatic action, and transports it to the cracker 1.

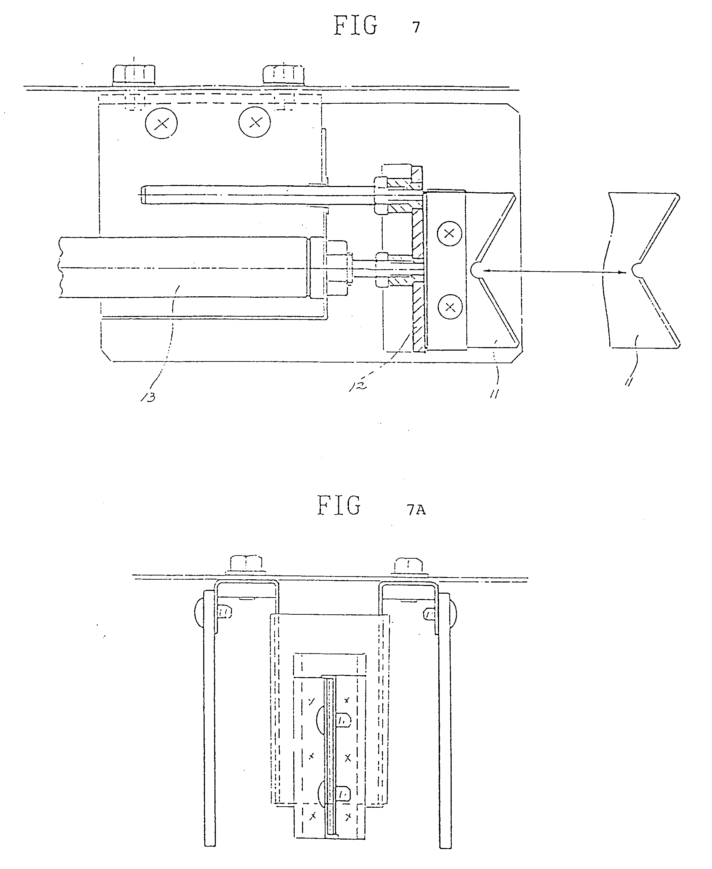

The construction of the egg cracker 1 is shown in Figs. 7 and 7A. Knife blades 11 are fixed to a fixing plate 12, and a cylinder 13 is fixed to the rear of the fixing plate 12. The forward motion of the fixing plate 12 by a pneumatic activation cracks the egg that is held by a pair of suction cones 53 on the conveyer 5.

A limit switch 9 on the cylinder 13 detects the cracking and activates the opening of the operation shafts 52 of the conveyer 5, which breaks the cracked egg held by the suction cones 53. The fluid content of the egg then drops to the fryer 4.

An erroneous cracker operation due to the size variation of eggs is prevented by a sensor located at the end of the knife housing.

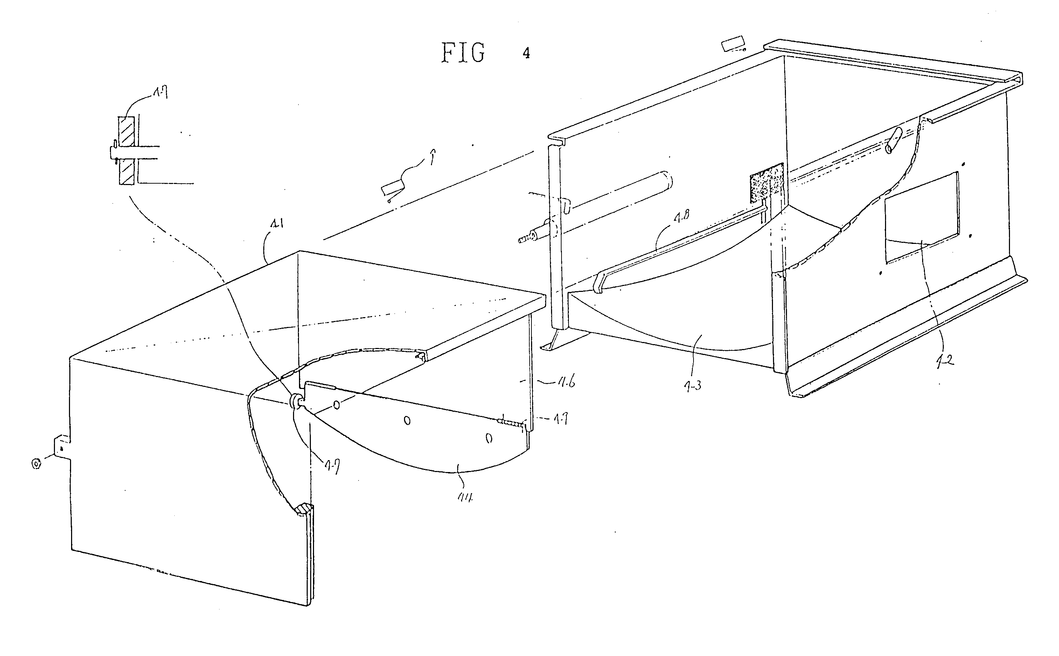

The fryer 4 is shown in Fig. 4. As the conveyer 5 returns to its original position, the fryer lid 41 closes, and the egg is then cooked by the magnetron 42 radiation and the heated frying pan 43. A timer stops the cooking and opens the lid 41. A scoop 44 located vertically at the front end of the lid 41 sweeps the surface of the frying pan 43 and the cooked egg is dispensed.

The concave surface 45 of the frying pan 43 helps to retain the desired shape of the egg during the cooking as shown in Figs. 4 and 5. The unwanted egg damage by the scoop blade does not occur by the closing of the fryer lid 41. This achieved by the scoop 44 design such that the scoop blade is unfolded vertically by the triggering of the spring 49 force of the operation plate only when the roller 47 slides along the guiding plate 48 on the fryer wall.

A limit switch 9, attached to the fryer body, senses the opening/closing of the lid 41.

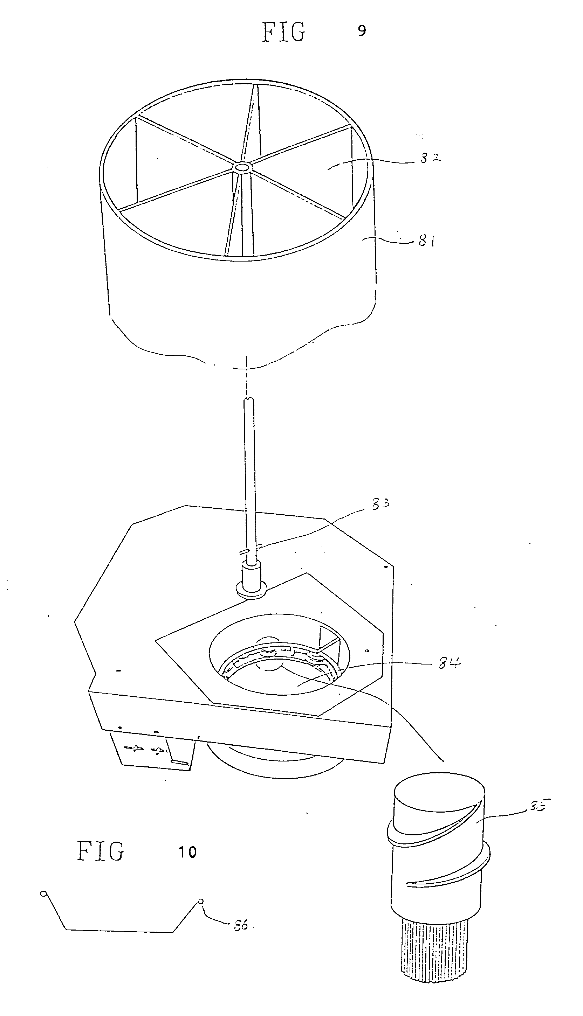

The fried egg is placed by the sweeping scoop on a serving dish, shown in Fig. 10, dispensed from the dish dispenser 8, shown in Fig. 9. Stacked dishes in compartments 82 of the dispenser cylinder 81 are sent to the dispenser opening 84 one at a time by the cylinder rotation driven by a pin 83. The spiral rotors 85 on the inner surface of the dispenser opening 84 grab and rotate the protruding rim 86 of the dish, dropping the dish.

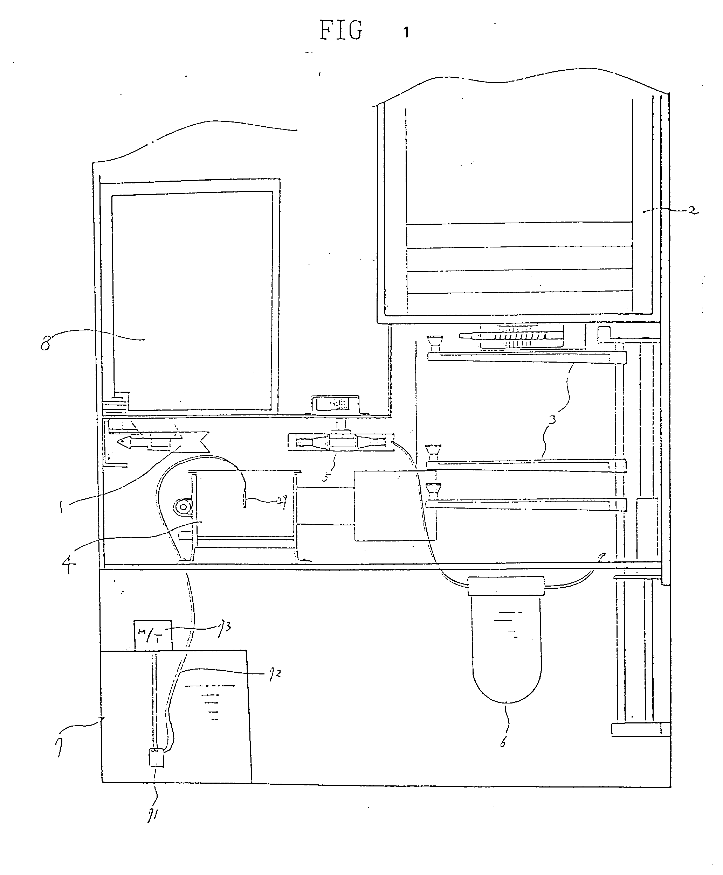

The oil injection system is shown in Fig. 1. Prior to the breaking of and after the cracking of the egg, the injector 7 injects oil onto the frying pan through a tube 72 through a pump 71 driven by a motor 73.

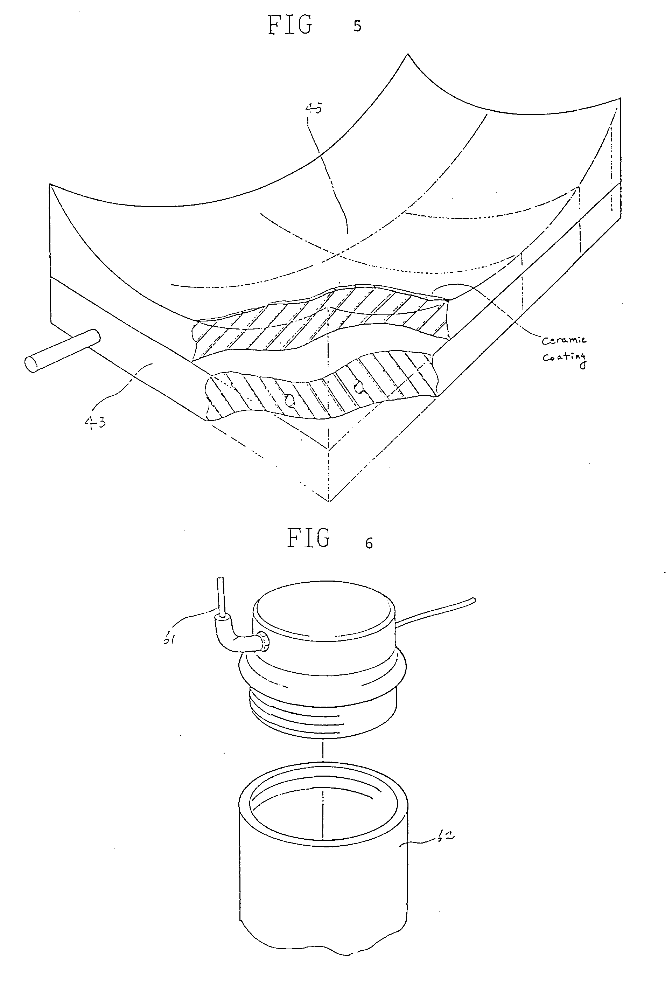

The egg shell attached to the suction cones 53 of the conveyer 5 is blown away by the pressurized air when the conveyer 5 is returned to its original position. The remaining egg fluid is recovored by a liquid trap 6 positioned in the middle of the vacuum hose to the suction cone 53 and then is dropped in the cask 62 connected to the liquid trap 6 through vacuum hose 61, shown in Fig. 6.

Upon the selection button being pressed after coin insertion, first the egg receptor 3 is lowered to the middle position of the two suction cones 53 of the egg conveyer 5.

At the same time, the limit switch 9, which is triggered by the lowering receptor 3, activates the opening of the fryer lid 41 and the sweeping operation of the scoop 44 attached to the lid 41. the frying pan 43 is cleaned by the sweeping operation of the scoop 44.

The suction cones 53 of the conveyer 5 then takes over the egg from the suction plate 37 of the receptor 3 by vacuum-suctioning from both sides.

The retreating operation shaft 52 behind the suction cone 53 triggers the limit switch 9 which in turn removes the vacuum pressure of the suction cone 53. The thus lowering suction cone 53 takes over the egg from the suction plate 37, and the conveyer 5 rotates and moves to the egg cracker 1.

The cracker 1 cracks the eggs, oil is then injected onto the frying pan 43, and the suction cones 53 separate to let the fluid content of the egg drop into the fryer 4. The conveyer 5 then retreats back to its original position, and the egg shell on the suction cones 53 is then removed by the pressurized air.

The egg receptor 3 then moves up and attaches its packing seal 39 to the egg-dispensing opening 25.

The microwave oven operates and the frying pan 43 is heated to cook the egg.

The timer stops the cooking, fryer lid 41 is opened, and the scoop 44 sweeps the fried egg.

The egg is then placed on a serving dish dropped from the dish dispenser 8.

All the operations are carried out pneumatically, and the limit switches 9 trigger the next operation at the completion of an operation. This precise, sequential, reliable machine operation will provide healthy fried eggs.

## Claims

1. The dispensing system of a fried egg vending machine consisting of:
an egg dispenser which dispenses egg sequentially through a jigged hole;
an egg receptor which holds the dispensed egg through a precision suction plate;
an egg conveyer which takes the egg from the receptor by fixing the egg onto its suction cone, transports it to the cracker, and breaks the cracked egg;
a egg fryer with an integrated scoop which cleans the frying pan and removes the fried egg;
an oil injector for a facile frying;
a dish dispenser with a spiral rotor; and
a liquid trap which traps the remnant egg fluid on the suction cone.
